# EUROPEAN PATENT APPLICATION

(11) **EP 4 498 559 A1**
(43) Date of publication of application: **29.01.2025**
(21) Application number: 24183931.5
(22) Date of filing: 24.06.2024
(51) Int. Cl.: H02J 3/32, H02J 7/00

(54) **OPERATION CONTROL METHOD AND DEVICE FOR BATTERY CLUSTER, AND RELATED APPARATUS**

(30) Priority: 25.07.2023 CN 202310919375
(71) Applicant: Sungrow Power Supply Co., Ltd., Hefei, Anhui 230088 (CN)
(72) Inventor: Wang, Caoyang, Hefei, 230088 (CN); Li, Qing, Hefei, 230088 (CN); Zhao, Yunfei, Hefei, 230088 (CN)
(74) Representative: Epping - Hermann - Fischer

(57) **Abstract**

An operation control method and device for a battery cluster and a related apparatus are provided. The method includes: determining whether a battery cluster which is fault-free and offline in an energy storage system meets a charging condition; determining whether a bus voltage of the energy storage system is greater than or equal to a voltage of the battery cluster if the battery cluster meets the charging condition; determining whether the battery cluster meets a switching-in condition if the bus voltage of the energy storage system is greater than or equal to the voltage of the battery cluster; and connecting the battery cluster to the energy storage system if the battery cluster meets the switching-in condition.

## Description

### FIELD

The present disclosure relates to the technical field of battery clusters in energy-storage systems, and in particular to an operation control method and device for a battery cluster, and a related apparatus.

### BACKGROUND

In a large-scale energy storage system, a battery cluster is controlled to be connected to or disconnected from the energy storage system by a direct-current contactor in a high-voltage switch box. During the operation of the system, if the battery cluster is disconnected from the system due to a fault of the battery cluster, a voltage difference dynamically changes when the energy storage system operates, there are few opportunities for the faulty battery cluster to be connected to the energy storage system due to a small load and the voltage difference. Therefore, it is difficult for the battery cluster disconnected from the system due to the fault to be connected to the system again after the fault is cleared, which ultimately results in a decrease in a charging-discharging capacity of the system and affects the use and benefits of users.

In the conventional technology, the battery cluster is controlled to be connected to or disconnected from the system by the direct-current contactor in the high-voltage switch box. Since the direct-current contactor owns a mechanical contact, the on-load switching has a great impact on a service life of the direct-current contactor. Moreover, the specification of the direct-current contactor provides service lives under different load currents. In order to ensure the service life of the direct-current contactor, there are some requirements on a voltage of battery clusters that has been connected to the system and a voltage of a battery cluster to be connected to the system when the battery cluster is to be connected to the system. A large circulation current between battery clusters is generated at a moment when the battery cluster is connected to the system due to a large voltage difference between the two voltages, resulting in a decrease in the service life of the direct-current contactor. Therefore, the voltage difference between the two voltages should not be too large. The voltage difference may be configured by software. If the voltage difference is greater than a threshold set by the software, the battery cluster fails to be connected to the system. During the operation of the system, if any one battery cluster fails and is disconnected from the system, the system charges and discharges normally. After the fault is cleared, the battery cluster fails to be connected to the system due to the voltage difference.

Therefore, a technical problem urgently to be solved by those skilled in the art is how to control the switching of the battery cluster to solve the problem of manual maintenance after a faulty battery cluster is disconnected from the system, and improve the automatic management capability of the energy storage system.

### SUMMARY

In view of this, an operation control method and device for a battery cluster and a related apparatus are provided according to embodiments of the present disclosure, to solve the problem of manual maintenance after a faulty battery cluster is disconnected from the system, and improve the automatic management capability of the energy storage system.

In order to achieve the above objectives, the following technical solutions are provided according to the embodiments of the present disclosure.

In a first aspect, an operation control method for a battery cluster is provided according to an embodiment of the present disclosure, and is applied to the energy storage system. The method includes: determining whether a battery cluster which is fault-free and offline in the energy storage system meets a charging condition; determining whether a bus voltage of the energy storage system is greater than or equal to a voltage of the battery cluster if the battery cluster meets the charging condition; determining whether the battery cluster meets a switching-in condition if the bus voltage of the energy storage system is greater than or equal to the voltage of the battery cluster; and connecting the battery cluster to the energy storage system if the battery cluster meets the switching-in condition.

In an embodiment, before the determining whether a battery cluster which is fault-free and offline in the energy storage system meets a charging condition, the method further includes: determining whether there is a battery cluster which is fault-free and offline in the energy storage system; and if the battery cluster which is fault-free and offline is in the energy storage system, determining whether the battery cluster which is fault-free and offline in the energy storage system meets the charging condition.

In an embodiment, the method further includes: determining whether the bus voltage of the energy storage system is less than or equal to the voltage of the battery cluster if the battery cluster does not meet the charging condition; determining whether the battery cluster meets the switching-in condition if the bus voltage of the energy storage system is less than or equal to the voltage of the battery cluster; and connecting the battery cluster to the energy storage system if the battery cluster meets the switching-in condition.

In an embodiment, the charging condition includes: a charging current of the battery cluster which is fault-free and offline being greater than or equal to a preset current threshold.

In an embodiment, the determining whether a bus voltage of the energy storage system is greater than or equal to a voltage of the battery cluster includes: clearing the number of times of power reduction of the energy storage system if the bus voltage of the energy storage system is less than the voltage of the battery cluster.

In an embodiment, the switching-in condition includes: a current operating current of the energy storage system being less than or equal to a preset current.

In an embodiment, the switching-in condition further includes: the number of times of power reduction of the energy storage system being greater than a preset number.

In an embodiment, the determining whether the battery cluster meets a switching-in condition includes: reducing a power of the energy storage system if the battery cluster does not meet the switching-in condition, and determining whether the bus voltage of the energy storage system is greater than or equal to the voltage of the battery cluster again.

In an embodiment, the connecting the battery cluster to the energy storage system includes: reading operation information of the battery cluster; and connecting the battery cluster to the energy storage system based on the operation information.

In a second aspect, an operation control device for a battery cluster is provided according to an embodiment of the present disclosure, and is applied to the energy storage system. The operation control device includes a charging determination module, a first voltage determination module, a first switching-in determination module and a first connection module.

The charging determination module is configured to determine whether a battery cluster which is fault-free and offline in the energy storage system meets a charging condition.

The first voltage determination module is configured to determine whether a bus voltage of the energy storage system is greater than or equal to a voltage of the battery cluster if the battery cluster meets the charging condition.

The first switching-in determination module is configured to determine whether the battery cluster meets a switching-in condition if the bus voltage of the energy storage system is greater than or equal to the voltage of the battery cluster.

The first connection module is configured to connect the battery cluster to the energy storage system if the battery cluster meets the switching-in condition.

In a third aspect, an electronic apparatus is provided according to an embodiment of the present disclosure. The electronic apparatus is configured to execute a program, where the program, when being executed, performs the operation control method for a battery cluster according to any one of the embodiments of the present disclosure described in the first aspect.

In a fourth aspect, a computer storage medium is provided according to an embodiment of the present disclosure. The storage medium includes a storage program, where the storage program, when running, controls an apparatus where the computer storage medium is located to perform the operation control method for a battery cluster according to any one of the embodiments of the present disclosure described in the first aspect.

The operation control method and device for a battery cluster and a related apparatus are provided according to the embodiments of the present disclosure. The method includes: determining whether a battery cluster which is fault-free and offline in an energy storage system meets a charging condition; determining whether a bus voltage of the energy storage system is greater than or equal to a voltage of the battery cluster if the battery cluster meets the charging condition; determining whether the battery cluster meets a switching-in condition if the bus voltage of the energy storage system is greater than or equal to the voltage of the battery cluster; and connecting the battery cluster to the energy storage system if the battery cluster meets the switching-in condition. In the solution, in a case of determining sequentially that the battery cluster which is fault-free and offline in the energy storage system meets the charging condition, the bus voltage of the energy storage system is greater than or equal to the voltage of the battery cluster, and the battery cluster meets the switching-in condition, the battery cluster meeting the switching-in condition is connected to the energy storage system, solving the problem of manual maintenance after a faulty battery cluster is disconnected from the energy storage system, thereby improving the automatic management capability of the energy storage system.

### BRIEF DESCRIPTION OF THE DRAWINGS

In order to more clearly illustrate technical solutions in embodiments of the present disclosure or in the conventional technology, the drawings to be used in the description of the embodiments or the conventional technology are briefly described below. Apparently, the drawings in the following description show only some embodiments of the present disclosure, and other drawings may be obtained by those skilled in the art from the drawings without any creative work.
Figure 1 is a schematic flowchart of an operation control method for a battery cluster according to an embodiment of the present disclosure;
Figure 2 is a schematic diagram of connecting a battery cluster which is fault-free and offline according to an embodiment of the present disclosure;
Figure 3 is a schematic diagram of disconnecting a faulty battery cluster according to an embodiment of the present disclosure;
Figure 4 is a schematic diagram of a control strategy for disconnecting a faulty battery cluster from an energy storage system according to an embodiment of the present disclosure;
Figure 5 is a schematic diagram of a control strategy for connecting a faulty battery cluster to an energy storage system after a fault of the battery cluster is cleared according to an embodiment of the present disclosure; and
Figure 6 is a schematic structural diagram of an operation control device for a battery cluster according to an embodiment of the present disclosure.

### DETAILED DESCRIPTION

The technical solutions in the embodiments of the present disclosure are described clearly and completely in conjunction with the drawings in the embodiments of the present disclosure hereinafter. It is apparent that the described embodiments are only some rather than all embodiments of the present disclosure. All other embodiments obtained by those skilled in the art based on the embodiments of the present disclosure without any creative work fall within the protection scope of the present disclosure.

In the present disclosure, terms "include", "comprise" or any other variants thereof are intended to be non-exclusive. Therefore, a process, method, article or device including a series of elements includes not only the elements but also other elements that are not enumerated, or further include elements inherent to the process, method, article or device. Unless expressively limited otherwise, a process, method, article or device limited by "comprising/including a(n) ..." does not exclude existence of another identical element in such process, method, article or device.

It can be seen from the background part that in the conventional operation control method for a battery cluster, manual maintenance is required after a faulty battery cluster is disconnected from the system, resulting in a poor automatic management capability of the energy storage system.

Therefore, an operation control method and device for a battery cluster and a related apparatus are provided according to embodiments of the present disclosure. In this solution, in a case of determining sequentially that a battery cluster which is fault-free and offline in an energy storage system meets a charging condition, a bus voltage of the energy storage system is greater than or equal to a voltage of the battery cluster, and the battery cluster meets a switching-in condition, the battery cluster meeting the switching-in condition is connected to the energy storage system, to solve the problem of manual maintenance after a faulty battery cluster is disconnected from the energy storage system, and improve the automatic management capability of the energy storage system.

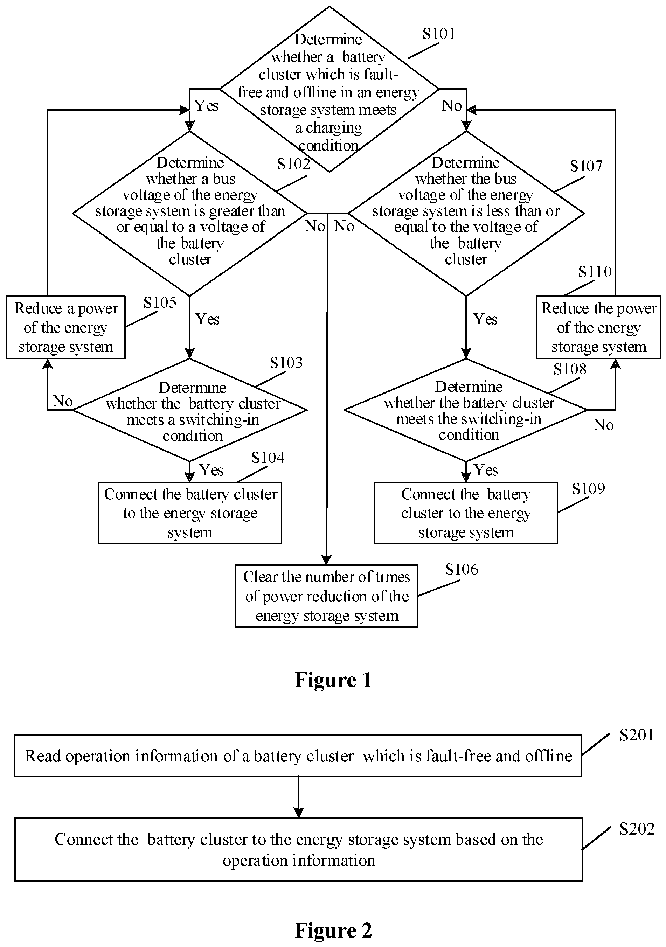

Reference is made to Figure 1, which is a schematic flowchart of an operation control method for a battery cluster according to an embodiment of the present disclosure.

The operation control method for a battery cluster is applied to an energy storage system. The operation control method for a battery cluster mainly includes the following steps 5101 to 5110.

In step S101, it is determined whether a battery cluster which is fault-free and offline in the energy storage system meets a charging condition. If the battery cluster which is fault-free and offline is in the energy storage system meets the charging condition, the process proceeds to step S102. If the battery cluster which is fault-free and offline is in the energy storage system does not meet the charging condition, the process proceeds to step S 107.

In step S101, the term "fault-free" refers to fault recovery of a faulty battery cluster after the battery cluster is disconnected from the energy storage system due to a fault of the battery cluster during automatic switching of the battery cluster.

The term "offline" refers to that a contactor of the battery cluster is opened, and the battery cluster is not connected in parallel to a direct-current bus of the energy storage system.

In practice, according to the characteristics of lithium battery, a voltage of a battery increases while the battery is charging, and a voltage of a battery decreases while the battery is discharging electricity. In a case that a battery cluster meets the charging condition, the battery cluster with a voltage less than or equal to a bus voltage is connected to the energy storage system. In a case that a battery cluster does not meet the charging condition, the battery cluster with a voltage greater than the bus voltage is connected to the energy storage system.

The charging condition is that a charging current of the battery cluster is greater than or equal to a preset current threshold.

It should be noted that a specific value of the preset current threshold may be determined according to the actual situation of switching of the battery cluster, which is not limited in the present disclosure. All the implementations fall within the protection scope of the present disclosure.

In some embodiments, the charging current is greater than or equal to 2A.

In an implementation of step S101, a charging current of the battery cluster which is fault-free and offline is compared with the preset current threshold. If the charging current of the battery cluster in the energy storage system is greater than or equal to the preset current threshold, it is determined that the battery cluster in the energy storage system meets the charging condition, and the process proceeds to step S102. If the charging current of the battery cluster in the energy storage system is less than the preset current threshold, it is determined that the battery cluster in the energy storage system does not meet the charging condition, and the process proceeds to step S107.

In an embodiment, before step S101 of determining whether the battery cluster which is fault-free and offline in the energy storage system meets the charging condition, the method further includes: determining whether there is a battery cluster which is fault-free and offline in the energy storage system. In a case that the battery cluster which is fault-free and offline is in the energy storage system, the process proceeds to step S101. In a case that there is no battery cluster which is fault-free and offline in the energy storage system, the process ends.

In practice, during the automatic switching of the battery cluster, after the battery cluster is disconnected from the energy storage system due to a fault of the battery cluster, if the fault of the battery cluster is cleared, the battery cluster is determined to be fault-free.

If the contactor of the battery cluster is closed, the battery cluster is connected in parallel to the direct-current bus of the energy storage system, and the battery cluster is determined to be online. If the contactor of the battery cluster is opened, the battery cluster is determined to be offline.

Furthermore, it is determined whether there is a battery cluster which is fault-free and offline in the energy storage system, that is, it is determined whether there is a battery cluster that is disconnected from the energy storage system due to a fault of the battery cluster and the fault is cleared, and the contactor of the battery cluster is opened, that is, the battery cluster is not connected in parallel to the direct-current bus of the energy storage system. If there is the battery cluster which is fault-free and offline in the energy storage system, the process proceeds to step S101. If there is no battery cluster which is fault-free and offline, the process ends.

In step S102, it is determined whether a bus voltage of the energy storage system is greater than or equal to a voltage of the battery cluster which is fault-free and offline. If the bus voltage of the energy storage system is greater than or equal to the voltage of the battery cluster, the process proceeds to step S103. If the bus voltage of the energy storage system is less than the voltage of the battery cluster, the process proceeds to step S106.

In an implementation of step S102, in a case of determining that the battery cluster which is fault-free and offline in the energy storage system meets the charging condition, the bus voltage of the energy storage system and the voltage of the battery cluster are detected, and the bus voltage of the energy storage system is compared with the voltage of the battery cluster. If the bus voltage of the energy storage system is greater than or equal to the voltage of the battery cluster, the process proceeds to step S103. If the bus voltage of the energy storage system is less than the voltage of the battery cluster, the process proceeds to step S106.

In step S103, it is determined whether the battery cluster which is fault-free and offline meets a switching-in condition. If the battery cluster meets the switching-in condition, the process proceeds to step S104. If the battery cluster does not meet the switching-in condition, the process proceeds to step S105.

In step S103, the switching-in condition includes that a current operating current of the energy storage system is less than or equal to a preset current.

It should be noted that a specific value of the preset current may be determined according to the actual situation of switching of the battery cluster, which is not limited in the present disclosure. All the implementations fall within the protection scope of the present disclosure.

In some embodiments, the preset current is 10A.

The switching-in condition further includes that the number of times of power reduction of the energy storage system is greater than a preset number.

It should be noted that a specific value of the preset number may be determined according to the actual situation of the switching of the battery cluster, which is not limited in the present disclosure. All the implementations fall within the protection scope of the present disclosure.

In some embodiments, the preset number is 3.

In an implementation of step S103, in a case of determining that the bus voltage of the energy storage system is greater than or equal to the voltage of the battery cluster which is fault-free and offline, the current operating current of the energy storage system is detected, and the current operating current is compared with the preset current. If the current operating current of the energy storage system is less than or equal to the preset current, it is determined that the battery cluster meets the switching-in condition, and the process proceeds to step S104. If the current operating current of the energy storage system is greater than the preset current, it is determined that the battery cluster does not meet the switching-in condition, and the process proceeds to step S105.

Alternatively, in a case of determining that the bus voltage of the energy storage system is greater than or equal to the voltage of the battery cluster which is fault-free and offline, the number of times of power reduction of the energy storage system is detected, and the number of times of power reduction of the energy storage system is compared with the preset number. If the number of times of power reduction of the energy storage system is greater than the preset number, it is determined that the battery cluster meets the switching-in condition and the process proceeds to step S104. If the number of times of power reduction of the energy storage system is less than or equal to the preset number, it is determined that the battery cluster does not meet the switching-in condition and the process proceeds to step S105.

In step S104, the battery cluster which is fault-free and offline is connected to the energy storage system.

In an implementation of step S104, in a case of determining that the battery cluster which is fault-free and offline meets the switching-in condition, the battery cluster meeting the switching-in condition is connected to the energy storage system.

In an embodiment, the process of connecting the battery cluster which is fault-free and offline to the energy storage system in step S104 is shown in Figure 2 and includes the following steps S201 and S202.

In step S201, operation information of the battery cluster is read.

In step S202, the battery cluster is connected to the energy storage system based on the operation information.

In practice, the battery cluster reports its own information in real time. The information includes a contactor status, a fault status, fault information, current, voltage and other information. The energy storage system logically determines whether to connect the battery cluster to the energy storage system or disconnect the battery cluster from the energy storage system based on the information reported by the battery cluster.

According to the above descriptions, it can be seen that in a case of determining that the battery cluster which is fault-free and offline meets the switching-in condition, the energy storage system reads the operation information of the battery cluster, and determines to connect the battery cluster meeting the switching-in condition to the energy storage system based on current operation information of the energy storage system and the current, voltage and other information reported by the battery cluster.

In step S105, the power of the energy storage system is reduced.

In an implementation step S105, in a case of determining that the battery cluster which is fault-free and offline does not meet the switching-in condition, a current power of the energy storage system is detected and a power of the energy storage system is reduced to half of the current power, and then it is determined whether the bus voltage of the energy storage system is greater than or equal to the voltage of the battery cluster again, that is, the process proceeds to step S102.

In step S106, the number of times of power reduction of the energy storage system is cleared.

In an implementation of step S106, in a case of determining that the battery cluster which is fault-free and offline meets the charging condition and the bus voltage of the energy storage system is less than the voltage of the battery cluster, the number of times of power reduction of the energy storage system is cleared.

Alternatively, in a case of determining that the battery cluster which is fault-free and offline does not meet the charging condition and the bus voltage of the energy storage system is greater than the voltage of the battery cluster, the number of times of power reduction of the energy storage system is cleared.

In step S107, it is determined whether the bus voltage of the energy storage system is less than or equal to the voltage of the battery cluster which is fault-free and offline. If the bus voltage of the energy storage system is less than or equal to the voltage of the battery cluster, the process proceeds to step S108. If the bus voltage of the energy storage system is greater than the voltage of the battery cluster, the process proceeds to step S 106.

In an implementation of step S107, in a case of determining that the battery cluster which is fault-free and offline does not meet the charging condition, the bus voltage of the energy storage system and the voltage of the battery cluster are detected, the bus voltage of the energy storage system is compared with the voltage of the battery cluster. If the bus voltage of the energy storage system is less than or equal to the voltage of the battery cluster, the process proceeds to step S108. If the bus voltage of the energy storage system is greater than the voltage of the battery cluster, the process proceeds to step S106.

In step S108, it is determined whether the battery cluster which is fault-free and offline meets the switching-in condition. If the battery cluster meets the switching-in condition, the process proceeds to step S109. If the battery cluster does not meet the switching-in condition, the process proceeds to step S110.

It should be noted that the switching-in condition in step S108 is the same as the switching-in condition described in step S103, and the details may be referred to step S103, which are not repeated herein.

In an implementation of step S108, in a case of determining that the bus voltage of the energy storage system is less than or equal to the voltage of the battery cluster which is fault-free and offline, the current operating current of the energy storage system is detected and the current operating current of the energy storage system is compared with the preset current. If the current operating current of the energy storage system is less than or equal to the preset current, it is determined that the battery cluster meets the switching-in condition, the process proceeds to step S109. If the current operating current of the energy storage system is greater than the preset current, it is determined that the battery cluster does not meet the switching-in condition, and the process proceeds to step S 110.

Alternatively, the number of times of power reduction of the energy storage system is detected, and the number of times of power reduction of the energy storage system is compared with the preset number. If the number of times of power reduction of the energy storage system is greater than the preset number, it is determined that the battery cluster which is fault-free and offline meets the switching-in condition, and the process proceeds to step S109. If the number of times of power reduction of the energy storage system is less than or equal to the preset number, it is determined that the battery cluster does not meet the switching-in condition, and the process proceeds to step S 110.

In step S109, the battery cluster is connected to the energy storage system.

In an implementation of step S109, in a case of determining that the battery cluster which is fault-free and offline meets the switching-in condition, the battery cluster meeting the switching-in condition is connected to the energy storage system.

In step S110, the power of the energy storage system is reduced.

In an implementation of step S 110, in a case of determining that the battery cluster which is fault-free and offline does not meet the switching-in condition, a current power of the energy storage system is detected and a power of the energy storage system is reduced to half of the current power, and then it is determined whether the bus voltage of the energy storage system is less than or equal to the voltage of the battery cluster again, that is, the process proceeds to step S107.

With the operation control method for a battery cluster according to the embodiment of the present disclosure, in a case of determining sequentially that the battery cluster which is fault-free and offline in the energy storage system meets the charging condition, the bus voltage of the energy storage system is greater than or equal to the voltage of the battery cluster, and the battery cluster meets the switching-in condition, the battery cluster meeting the switching-in condition is connected to the energy storage system, solving the problem of manual maintenance after a faulty battery cluster is disconnected from the system, thereby improving the automatic management capability of the energy storage system.

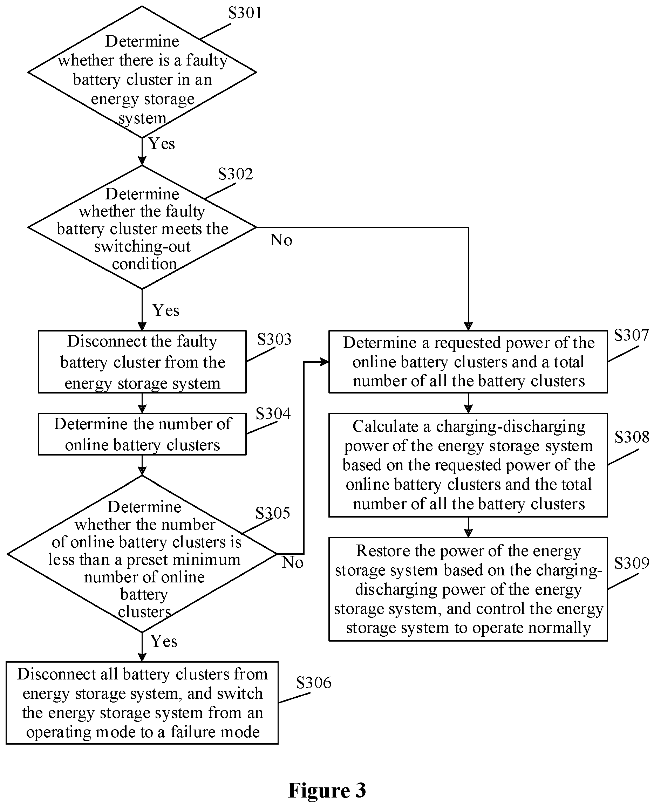

Based on the implementation of connecting the battery cluster which is fault-free and offline to the energy storage system described above, correspondingly, an implementation of disconnecting the battery cluster which is fault-free and offline from the energy storage system is provided according to an embodiment of the present disclosure. As shown in Figure 3, the implementation includes the following steps S301 to S309.

In step S301, it is determined whether there is a faulty battery cluster in the energy storage system. If there is the faulty battery cluster in the energy storage system, the process proceeds to step S302. If there is no faulty battery cluster in the energy storage system, the process ends.

Based on the above descriptions, it can be seen that the term "faulty" refers to that the battery cluster fails during the automatic switching of the battery cluster, affecting the operation efficiency of the energy storage system.

Furthermore, it is determined whether there is a faulty battery cluster in the energy storage system, that is, it is determined whether a battery cluster fails in the energy storage system. If there is a faulty battery cluster in the energy storage system, the process proceeds to step S302. If there is no faulty battery cluster in the energy storage system, the process ends.

In practice, for each battery cluster in the energy storage system, a cell monitor unit (CMU) detects operation information of the battery cluster, and determines whether the battery cluster fails based on the operation information of the battery cluster. If the battery cluster fails, a requested power of the battery cluster is 0. If the battery cluster does not fail, the requested power of the battery cluster is obtained based on a preset current-limiting matrix. The CMU reports a fault status and the requested power of the battery cluster to a battery system management unit. The battery system management unit acquires or reads the fault status and the requested power of each battery cluster in the energy storage system reported by the CMU in real time, and controls a charging-discharging power of the energy storage system.

The operation information of each battery cluster includes at least a fault status, an online status and a requested power of the battery cluster.

In step S302, it is determined whether the faulty battery cluster meets a switching-out condition. If the faulty battery cluster meets the switching-out condition, the process proceeds to step S303. If the faulty battery cluster does not meet the switching-out condition, the process proceeds to step S307.

In step S302, the switching-out condition includes that the charging-discharging power of the energy storage system is equal to a preset power.

It should be noted that a specific value of the preset power may be determined according to the actual situation of switching of the battery cluster, which is not limited in the present disclosure. All the implementations fall within the protection scope of the present disclosure.

In an implementation of step S302, in a case of determining that there is the faulty battery cluster in the energy storage system, the charging-discharging power of the energy storage system is detected, and the charging-discharging power of the energy storage system is compared with the preset power. If the charging-discharging power of the energy storage system is equal to the preset power, it is determined that the faulty battery cluster meets the switching-out condition, and the process proceeds to step S303. If the charging-discharging power of the energy storage system is not equal to the preset power, it is determined that the faulty battery cluster does not meet the switching-out condition, and the process proceeds to step S307.

In step S303, the faulty battery cluster is disconnected from the energy storage system.

In an implementation of step S303, in a case of determining that the faulty battery cluster meets the switching-out condition, the faulty battery cluster meeting the switching-out condition is disconnected from the energy storage system.

In practice, in a case of determining that the faulty battery cluster meets the switching-out condition, the charging-discharging power of the energy storage system is reduced to 0, and the faulty battery cluster meeting the switching-out condition is disconnected from the energy storage system.

In step S304, the number of online battery clusters is determined.

In an implementation of step S304, after the faulty battery cluster is disconnected from the energy storage system, the energy storage system includes fault-free battery clusters. Online battery clusters in the fault-free battery clusters are determined, that is, the number of the online battery clusters in the fault-free battery clusters is determined.

In step S305, in a case that the number of online battery clusters is less than a preset minimum number of battery clusters, the process proceeds to step S306. In a case that the number of online battery clusters is greater than or equal to the preset minimum number of battery clusters, the process proceeds to step S307.

In step S305, the minimum number of battery clusters is a minimum number of battery clusters that meets a power demand of users, and is a total number of battery clusters by default.

In some embodiments, the minimum number of battery clusters is 1.

In an implementation of step S305, the number of online battery clusters is compared with the preset minimum number of battery clusters. If the number of online battery clusters is less than the preset minimum number of battery clusters, it indicates that the number of online battery clusters in the energy storage system fails to meet the power demand of users, and the process proceeds to step S306. If the number of online battery clusters is greater than or equal to the preset minimum number of battery clusters, it indicates that the number of online battery clusters in the energy storage system meets the power demand of users, and the process proceeds to step S307.

In step S306, all battery clusters are disconnected from the energy storage system, and the energy storage system is switched from an operating mode to a failure mode.

In an implementation of step S306, in a case of determining that the number of online battery clusters is less than the preset minimum number of battery clusters, all battery clusters are disconnected from the energy storage system, the energy storage system is currently in the operating mode, and the energy storage system is switched from the operating mode to the failure mode.

In other words, in a case of determining that the number of online battery clusters is less than the preset minimum number of battery clusters, the battery system management unit controls all the battery clusters to be powered down. Specifically, the battery system management unit controls the energy storage system to send a power-down instruction to the CMU, and the CMU receives the power-down instruction, and controls all the battery clusters to be powered down in response to the power-down instruction.

In step S307, the requested power of the online battery clusters and the total number of all the battery clusters are determined.

In an implementation of step S307, in a case of determining that the number of the online battery clusters is greater than or equal to the preset minimum number of battery clusters, a requested power of each of the online battery clusters and the total number of all the battery clusters are obtained based on the operation information of all the battery clusters.

In step S308, the charging-discharging power of the energy storage system is calculated based on the requested power of the online battery clusters and the total number of all the battery clusters.

In an implementation of step S308, the charging-discharging power of the energy storage system is calculated based on the requested power of each of the online battery clusters and the total number of all the battery clusters.

In step S309, the power of the energy storage system is restored based on the charging-discharging power of the energy storage system, and the energy storage system is controlled to operate normally.

In an implementation of step S309, the power of the energy storage system is restored based on the calculated charging-discharging power of the energy storage system, and the energy storage system is controlled to operate normally based on the power of the energy storage system.

With the operation control method for a battery cluster according to the embodiments of the present disclosure, in a case of determining that the faulty battery cluster in the energy storage system meets the switching-out condition, the faulty battery cluster is disconnected from the energy storage system, and it is determined whether to disconnect all battery clusters from the energy storage system based on the number of online battery clusters, so as to determine whether to switch the energy storage system to be in the failure mode, improving the automatic management capability of the energy storage system.

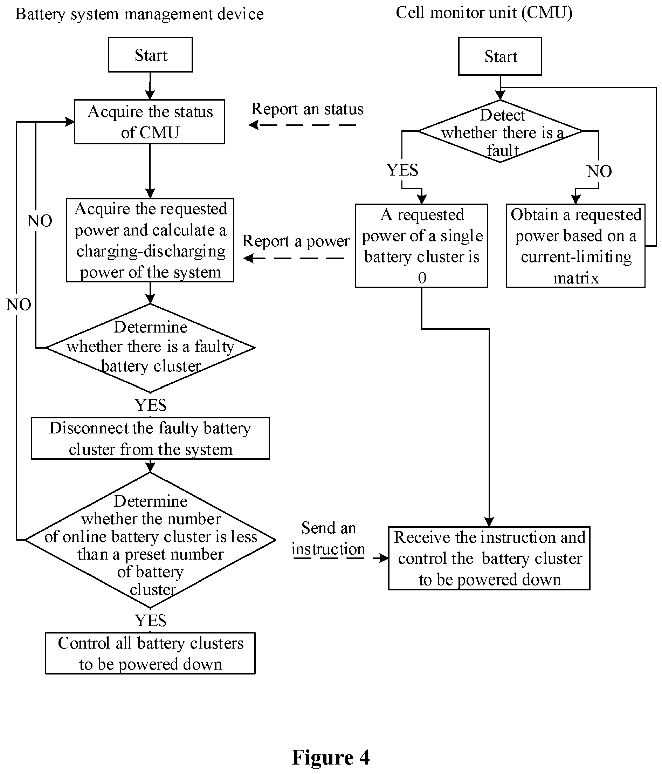

In order to better understand a switching-out control strategy and a switching- in control strategy in the above descriptions, as shown in Figure 4, Figure 4 is a schematic diagram showing a control strategy for disconnecting a faulty battery cluster from an energy storage system according to an embodiment of the present disclosure.

In Figure 4, for each battery cluster, the CMU detects whether the battery cluster fails. If the battery cluster fails, a charging-discharging power of the battery cluster and a requested power of the battery cluster are detected. In this case, the requested power of the battery cluster is 0. If the battery cluster does not fail, a requested power of the battery cluster is obtained based on the preset current-limiting matrix, and the fault status and the requested power of the battery cluster are reported to the battery system management unit.

The battery system management unit acquires the fault status and the requested power reported by the CMU in real time, and controls the charging-discharging power of the energy storage system. If there is a faulty battery cluster, the battery system management unit reduces the charging-discharging power of the energy storage system to 0, and disconnects the faulty battery cluster from the energy storage system.

The battery system management unit determines whether the number of online battery clusters is less than the preset minimum number of battery clusters. If the number of online battery clusters is greater than or equal to the minimum number of battery clusters, the battery system management unit calculates the charging-discharging power of the energy storage system based on a requested power of current online battery clusters, restores a power of the energy storage system, so that the system operates normally. If the number of online battery clusters is less than the preset minimum number of battery clusters, the battery system management unit disconnects all battery clusters from the energy storage system, controls all the battery clusters to be powered down, and switches the energy storage system from the operating mode to the failure mode. In other words, the battery system management unit sends an instruction to the CMU, the CMU receives the instruction and controls corresponding battery clusters to be powered down in response to the instruction.

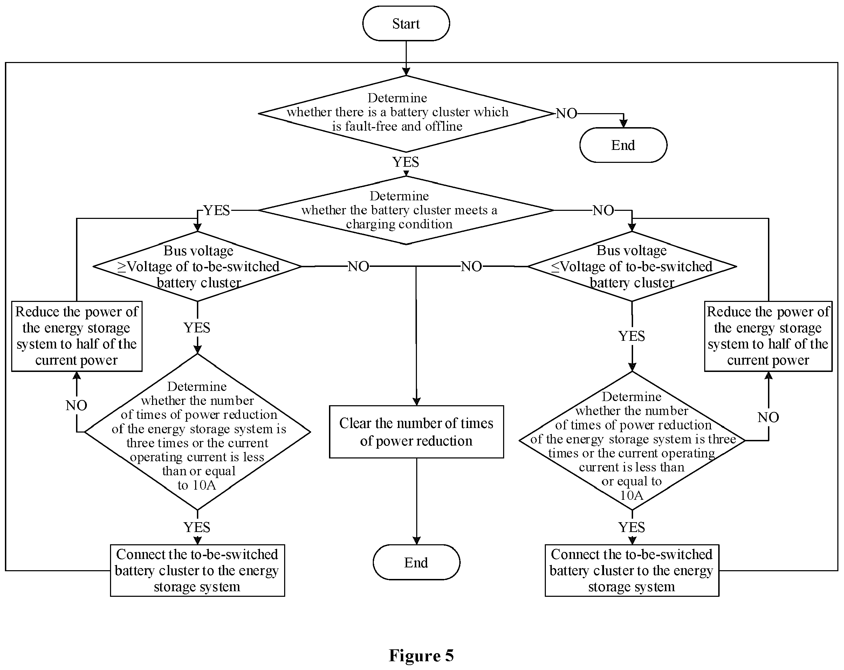

After the fault of the faulty battery cluster is cleared, reference is made to Figure 5, which is a schematic diagram of a control strategy for connecting a faulty battery cluster to an energy storage system after a fault of the faulty battery cluster is cleared according to an embodiment of the present disclosure.

In Figure 5, the control strategy includes the followings steps 1 to 8.

In step 1, the energy storage system monitors whether there is a battery cluster which is fault-free and offline, the process proceeds to step 2 if there is the battery cluster which is fault-free and offline.

In step 2, it is determined whether the battery cluster which is fault-free and offline meets the charging condition. If the battery cluster meets the charging condition, the process proceeds to step 3. If the battery cluster does not meet the charging condition, the process proceeds to step 6.

In step 3, it is determined whether the bus voltage of the energy storage system is greater than or equal to the voltage of the to-be-switched battery cluster. If the bus voltage of the energy storage system is greater than or equal to the voltage of the to-be-switched battery cluster, the process proceeds to step 4. If the bus voltage of the energy storage system is less than the voltage of the to-be-switched battery cluster, the process proceeds to step 5.

In step 4, the power of the energy storage system is gradually reduced, the number of times of power reduction of the energy storage system and the current operating current of the energy storage system are detected, it is determined whether the number of times of power reduction of the energy storage system is greater than three times or the current operating current is less than or equal to 10A. If the number of times of power reduction of the energy storage system is less than or equal to three times, and the current operating current is greater than 10A, the power of the energy storage system is reduced to half of the current power, and the process proceeds to step 2. If the number of times of power reduction of the energy storage system is greater than three times or the current operating current is less than or equal to 10A, the to-be-switched battery cluster is connected to the energy storage system, and the process proceeds to step 1.

In step 5, the number of times of power reduction of the energy storage system is cleared, and the process proceeds to step 1.

In step 6, it is determined whether the bus voltage of the energy storage system is less than or equal to the voltage of the to-be-switched battery cluster. If the bus voltage of the energy storage system is less than or equal to the voltage of the to-be-switched battery cluster, the process proceeds to step 7. If the bus voltage of the energy storage system is greater than the voltage of the to-be-switched battery cluster, the process proceeds to step 8.

In step 7, the power of the energy storage system is gradually reduced, the number of times of power reduction of the energy storage system and the current operating current of the energy storage system are detected, it is determined whether the number of times of power reduction of the energy storage system is greater than three times or the current operating current is less than or equal to 10A. If the number of times of power reduction of the energy storage system is less than or equal to three times, and the current operating current is greater than 10A, the power of the energy storage system is reduced to half of the current power, and the process proceeds to step 2. If the number of times of power reduction of the energy storage system is greater than three times or the current operating current is less than or equal to 10A, the to-be-switched battery cluster is connected to the energy storage system, and the process proceeds to step 1.

In step 8, the number of times of power reduction of the energy storage system is cleared and the process proceeds to step 1.

With the operation control method for a battery cluster described above, the problem of manual closing after a faulty battery cluster is disconnected from the energy storage system can be completely solved, reducing costs for maintenance and operation of the energy storage system. Moreover, considering the voltage change characteristics of lithium iron batteries after power reduction, three times of gradual power reduction can effectively reduce the switching time, maximizing the utilization of the energy storage system, ensuring benefits of users, thereby improving the intelligent management capability of the energy storage system without increasing the hardware cost.

Based on the operation control method for a battery cluster according to the embodiment of the present disclosure, if there is a faulty battery cluster in the energy storage system and the faulty battery cluster meets the switching-out condition, the faulty battery cluster is disconnected from the energy storage system. If there is the fault-free and offline battery cluster in the energy storage system, in a case of determining sequentially that the battery cluster which is fault-free and offline meets the charging condition, the bus voltage of the energy storage system is greater than or equal to the voltage of the battery cluster, and the battery cluster meets the switching-in condition, the battery cluster meeting the switching-in condition is connected to the energy storage system, solving the problem of manual maintenance after a faulty battery cluster is disconnected from the system, thereby improving the automatic management capability of the energy storage system.

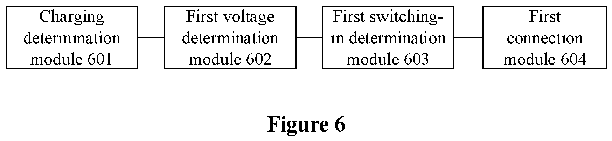

Corresponding to the operation control method for a battery cluster according to the embodiment of the present disclosure shown in Figure 1, an operation control device for a battery cluster is further provided according to an embodiment of the present disclosure, which is applied to the energy storage system. As shown in Figure 6, the operation control device for a battery cluster includes: a charging determination module 601, a first voltage determination module 602, a first switching-in determination module 603 and a first connection module 604.

The charging determination module 601 is configured to determine whether a battery cluster which is fault-free and offline in the energy storage system meets a charging condition. If the battery cluster in the energy storage system meets the charging condition, functions of the first voltage determination module 602 are performed. If the battery cluster in the energy storage system does not meet the charging condition, functions of a second voltage determination module are performed.

The first voltage determination module 602 is configured to determine whether a bus voltage of the energy storage system is greater than or equal to a voltage of the battery cluster which is fault-free and offline. If the bus voltage of the energy storage system is greater than or equal to the voltage of the battery cluster, functions of the first switching-in determination module 603 are performed. If the bus voltage of the energy storage system is less than the voltage of the battery cluster, functions of a clearing module are performed.

The first switching-in determination module 603 is configured to determine whether the battery cluster which is fault-free and offline meets a switching-in condition. If the battery cluster meets the switching-in condition, functions of the first connection module are performed. If the battery cluster does not meet the switching-in condition, functions of a first power reduction module are performed.

The first connection module 604 is configured to connect the battery cluster which is fault-free and offline to the energy storage system.

In an embodiment, based on the above operation control device for a battery cluster shown in Figure 6, before the charging determination module 601 determines whether the battery cluster which is fault-free and offline in the energy storage system meets the charging condition, the operation control device for a battery cluster further includes a first determination module.

The first determination module is configured to determine whether there is the battery cluster which is fault-free and offline in the energy storage system, and the functions of the charging determination module 601 are performed if the battery cluster which is fault-free and offline is in the energy storage system.

In an embodiment, based on the above operation control device for a battery cluster shown in Figure 6, the operation control device for a battery cluster further includes a second voltage determination module, a second switching-in determination module and a second connection module.

The second voltage determination module is configured to determine whether the bus voltage of the energy storage system is less than or equal to the voltage of the battery cluster which is fault-free and offline. If the bus voltage of the energy storage system is less than or equal to the voltage of the battery cluster, functions of the second switching-in determination module are performed. If the bus voltage of the energy storage system is greater than the voltage of the battery cluster, functions of the clearing module are performed.

The second switching-in determination module is configured to determine whether the battery cluster which is fault-free and offline meets the switching-in condition. If the battery cluster meets the switching-in condition, functions of the second connection module are performed. If the battery cluster does not meet the switching-in condition, functions of the second power reduction module are performed.

The second connection module is configured to connect the battery cluster which is fault-free and offline to the energy storage system.

In an embodiment, based on the above operation control device for a battery cluster shown in Figure 6, the charging condition includes that a charging current of the battery cluster which is fault-free and offline is greater than or equal to a preset current threshold.

In an embodiment, based on the above operation control device for a battery cluster shown in Figure 6, the operation control device for a battery cluster further includes the clearing module.

The clearing module is configured to clear the number of times of power reduction of the energy storage system.

In an embodiment, based on the above operation control device for a battery cluster shown in Figure 6, the switching-in condition includes that a current operating current of the energy storage system is less than or equal to a preset current.

In an embodiment, based on the above operation control device for a battery cluster shown in Figure 6, the switching-in condition further includes that the number of times of power reduction of the energy storage system is greater than a preset number.

In an embodiment, based on the above operation control device for a battery cluster shown in Figure 6, the operation control device for a battery cluster further includes a first power reduction module and a second power reduction module.

The first power reduction module is configured to reduce the power of the energy storage system and determine whether the bus voltage of the energy storage system is greater than or equal to the voltage of the battery cluster which is fault-free and offline again.

The second power reduction module is configured to reduce the power of the energy storage system and determine whether the bus voltage of the energy storage system is less than or equal to the voltage of the battery cluster which is fault-free and offline again.

In an embodiment, based on the first connection module and the second connection module shown in Figure 6, the first connection module or the second connection module is specifically configured to: read operation information of the battery cluster which is fault-free and offline; and connect the battery cluster to the energy storage system based on the operation information.

It should be noted that, the principle and execution process of various modules in the operation control device for a battery cluster according to the foregoing embodiments of the present disclosure are the same as those in the operation control method for a battery cluster according to the foregoing embodiments of the present disclosure, which may be referred to the corresponding part in the operation control method for a battery cluster according to the foregoing embodiments of the present disclosure, which are not repeated herein.

In the operation control device for a battery cluster according to the embodiments of the present disclosure, in a case of determining sequentially that the battery cluster which is fault-free and offline in the energy storage system meets the charging condition, the bus voltage of the energy storage system is greater than or equal to the voltage of the battery cluster, and the battery cluster meets the switching-in condition, the battery cluster meeting the switching-in condition is connected to the energy storage system, solving the problem of manual maintenance after a faulty battery cluster is disconnected from the system, thereby improving the automatic management capability of the energy storage system.

An electronic apparatus is further provided according to an embodiment of the present disclosure. The electronic apparatus is configured to execute a program. The program, when being executed, performs the operation control method for a battery cluster according to any one of the embodiments described above.

It should be noted that the relevant descriptions of the operation control method for a battery cluster may be referred to the corresponding embodiments described above, which are not repeated herein.

A computer storage medium is further provided according to an embodiment of the present disclosure. The storage medium includes a storage program, where, the storage program, when running, controls an apparatus where the storage medium is located to perform the operation control method for a battery cluster according to any one of the embodiments described above.

In the context of the present disclosure, the computer storage medium may be a tangible medium, which may include or store a program for use by or in combination with an instruction execution system, apparatus or device. A machine-readable medium may be a machine-readable signal medium or a machine-readable storage medium. The machine-readable medium may include, but is not limited to, system, an apparatus, or a device in an electronic, magnetic, optical, electromagnetic, infrared, or semi-conductive form, or any suitable combination thereof. More specific examples of the machine-readable storage medium may include, one or more wire-based electrical connections, a portable computer disk, a hard disk, a random access memory (RAM), a read-only memory (ROM), an erasable programmable read-only memory (EPROM), a flash memory, an optical fiber, a portable compact disc read-only memory (CD-ROM), an optical storage device, a magnetic storage device or any suitable combination thereof.

It should be noted that, the relevant descriptions of the operation control method for a battery cluster may be referred to the corresponding embodiments described above, which are not repeated herein.

Those skilled in the art may further understand that, units and algorithm steps described in conjunction with the embodiments disclosed herein may be implemented by electronic hardware, computer software or a combination thereof. In order to clearly describe interchangeability of the hardware and the software, the units and steps in each embodiment are generally described above based on functions. Whether the functions are implemented by the hardware or the software depends on a specific application of the technical solutions and a design constraint. For each of the specific applications, those skilled in the art may select a specific implementation to realize the functions described above, and the implementation should fall within the scope of the present disclosure.

In the present disclosure, the relationship terms such as "first" and "second" are only used to distinguish one entity or operation from another entity or operation, rather than to necessitate or imply that an actual relationship or order exists between the entities or operations. Moreover, terms such as "include", "comprise" or any other variants thereof are intended to be non-exclusive. Therefore, a process, method, article or device including a series of elements includes not only the elements but also other elements that are not clearly enumerated, or further includes elements inherent to the process, method, article or device. Unless expressively limited otherwise, the statement "comprising (including) one..." does not exclude existence of other similar elements in the process, method, article or device.

Based on the above description of the disclosed embodiments, those skilled in the art can implement or carry out the present disclosure. It is apparent for those skilled in the art to make many modifications to these embodiments. The general principle defined herein may be applied to other embodiments without departing from the spirit or scope of the present disclosure. Therefore, the present disclosure is not limited to the embodiments illustrated herein, but should be defined by the widest scope consistent with the principle and novel features disclosed herein.

## Claims

1. An operation control method for a battery cluster, applied to an energy storage system, and comprising:
determining whether a battery cluster which is fault-free and offline in the energy storage system meets a charging condition;
determining whether a bus voltage of the energy storage system is greater than or equal to a voltage of the battery cluster if the battery cluster meets the charging condition;
determining whether the battery cluster meets a switching-in condition if the bus voltage of the energy storage system is greater than or equal to the voltage of the battery cluster; and
connecting the battery cluster to the energy storage system if the battery cluster meets the switching-in condition.

2. The method according to claim 1, wherein the determining whether a battery cluster which is fault-free and offline in the energy storage system meets a charging condition further comprises:
determining whether there is a battery cluster which is fault-free and offline in the energy storage system; and
determining whether the battery cluster which is fault-free and offline in the energy storage system meets the charging condition if the battery cluster which is fault-free and offline is in the energy storage system.

3. The method according to claim 1, further comprising:
determining whether the bus voltage of the energy storage system is less than or equal to the voltage of the battery cluster if the battery cluster does not meet the charging condition;
determining whether the battery cluster meets the switching-in condition if the bus voltage of the energy storage system is less than or equal to the voltage of the battery cluster; and
connecting the battery cluster to the energy storage system if the battery cluster meets the switching-in condition.

4. The method according to claim 1 or 3, wherein the charging condition comprises:
a charging current of the battery cluster which is fault-free and offline being greater than or equal to a preset current threshold.

5. The method according to claim 1, wherein the determining whether a bus voltage of the energy storage system is greater than or equal to a voltage of the battery cluster comprises:
clearing the number of times of power reduction of the energy storage system if the bus voltage of the energy storage system is less than the voltage of the battery cluster.

6. The method according to claim 1 or 3, wherein the switching-in condition comprises:
a current operating current of the energy storage system being less than or equal to a preset current.

7. The method according to claim 1 or 3, wherein the switching-in condition further comprises:
the number of times of power reduction of the energy storage system being greater than a preset number.

8. The method according to claim 1 or 3, wherein the determining whether the battery cluster meets a switching-in condition comprises:
reducing a power of the energy storage system if the battery cluster does not meet the switching-in condition; and
determining whether the bus voltage of the energy storage system is greater than or equal to the voltage of the battery cluster again.

9. The method according to claim 1 or 3, wherein the connecting the battery cluster to the energy storage system comprises:
reading operation information of the battery cluster; and
connecting the battery cluster to the energy storage system based on the operation information.

10. An operation control device for a battery cluster, applied to an energy storage system, and comprising:
a charging determination module, configured to determine whether a battery cluster which is fault-free and offline in the energy storage system meets a charging condition;
a first voltage determination module, configured to determine whether a bus voltage of the energy storage system is greater than or equal to a voltage of the battery cluster if the battery cluster meets the charging condition;
a first switching-in determination module, configured to determine whether the battery cluster meets a switching-in condition if the bus voltage of the energy storage system is greater than or equal to the voltage of the battery cluster; and
a first connection module, configured to connect the battery cluster to the energy storage system if the battery cluster meets the switching-in condition.

11. An electronic apparatus, configured to execute a program, wherein
the program, when being executed, performs the operation control method for a battery cluster according to any one of claims 1 to 9.

12. A computer storage medium, comprising a storage program, wherein
the storage program, when running, controls an apparatus where the computer storage medium is located to perform the operation control method for a battery cluster according to any one of claims 1 to 9.
